# EUROPEAN PATENT APPLICATION

(11) **EP 3 031 668 A1**
(43) Date of publication of application: **15.06.2016**
(21) Application number: 14197093.9
(22) Date of filing: 10.12.2014
(51) Int. Cl.: B60R 1/00, G06T 7/00, H04N 17/00

(54) **Image calibration and monitoring apparatus and image calibration and monitoring method**

(71) Applicant: Application Solutions (Electronics and Vision) Limited, Lewes, East Sussex BN7 2 AQ (GB)
(72) Inventor: Guerreiro, Rui, Brighton, BN1 5PP (GB); Silva, Carlos, Eastbourne, BN21 1EL (GB); Wibberley, Dave, Brighton, BN1 6RG (GB)
(74) Representative: Büchner, Jörg

(57) **Abstract**

The present invention relates to an enhanced image calibration and monitoring apparatus and method for calibrating and monitoring an imaging of a camera of a vehicle. A predetermined light pattern is emitted by a lighting unit, for instance a headlight of a vehicle. The headlight of the vehicle may be configured as a digital light processing projector or a liquid crystal display projector. The emitted light pattern is projected at least partly in the field of view of a camera. After capturing the emitted light pattern by this camera, the image data provided by the camera are analysed in order to determine calibration or monitoring parameters of the camera. In this way, an automated calibration and monitoring of an optical system may be obtained. By using the headlights of the vehicle for emitting the light pattern, no further light sources are required. Hence, the costs for such a calibration and monitoring can be reduced.

## Description

The present invention relates to an image calibration and monitoring apparatus and an image calibration and monitoring method. In particular, the present invention relates to an image calibration and monitoring apparatus and method for calibrating and monitoring an imaging of a camera of a vehicle.

### Background of the invention

Modern vehicles utilize cameras in a plurality of vehicle vision systems. For example, cameras are used for rear view camera systems, collision alert systems, lane departure warning systems, adaptive cruise control systems, pedestrian recognition systems or traffic sign recognition systems. The cameras of all these systems have to be calibrated to ensure that the associated cameras are aligned properly and provide optimal images. Additionally, a primary camera calibration has to be performed in the factory after manufacturing the camera. Such a camera calibration is time-consuming and, therefore, expensive.

Additionally, the lenses of camera may be polluted during operation. For instance, soiling on a lens of the optical system of camera may lead to disturbances when capturing images. Hence, the system which analyses the captured images may not work properly.

Accordingly, it is desirable to provide an improved apparatus and method for calibrating a camera of a vehicle. Further, it is also desirable to provide an improved apparatus and method for monitoring the imaging of a camera of a vehicle.

### Summary of the invention

According to a first aspect, the present invention provides an image calibration and monitoring apparatus for calibrating and monitoring an imaging of a camera of a vehicle. The image calibration and monitoring apparatus comprises a lighting unit configured to emit a predetermined light pattern; and a processor configured to obtain image data from the camera of the vehicle in response to an emitted predetermined light pattern emitted by the lighting unit, and to determine a camera calibration and monitoring parameter based on the obtained image data.

According to a further aspect, the present invention provides an image calibration and monitoring method for calibrating and monitoring an imaging of a camera of a vehicle. The image calibration and monitoring method comprises the steps of emitting a predetermined light pattern; obtaining image data from the camera of the vehicle in response to the emitted predetermined light pattern; and determining a camera calibration and monitoring parameter based on the obtained image data.

The present invention provides an analysis of an image capturing system, in particular an image capturing system of a vehicle. Further, the present invention provides a monitoring of such an image capturing system. It is for this purpose that a predetermined light pattern is emitted. In particular, such a predetermined light pattern may be projected in the field of view of a camera. Subsequently, the camera may capture an image of the projected light pattern and provide image data of the captured image for a further analysis. By comparing the image data of the image captured by the camera with the known pattern of the emitted light pattern, deviations in the captured image data can be easily determined. Based on this deviation, it is possible to determine parameters for calibrating the camera. In particular, it is possible to determine one or more parameters for compensating the deviations determined by comparing the captured image data with the pattern of the emitted light pattern. In this way, the camera and the whole optical system can be calibrated easily.

Hence, it is not necessary to perform such a calibration of the camera in advance, when installing the camera in the vehicle. In particular, it is not necessary to perform a primary calibration of the camera in the factory when manufacturing the camera. Hence, the costs for such an image capturing system can be reduced.

Additionally, by calibrating the camera after the camera has been installed in the vehicle, it is possible to adapt the camera to the specific situation in the respective vehicle.

Further, by comparing the captured image data with the pattern of an emitted light pattern, it is also possible to identify disturbances in the optical system of the camera. For instance, soiling of the lenses of the optical system of the camera can be identified. In this way, disturbances in the operation of the camera can be easily identified. By identifying such disturbances, the respective problems, for instance dust on a lens, can be removed in order to ensure a proper operation of the camera and the subsequent processing. Hence, the reliability of the system using the image data of the camera can be improved.

According to an embodiment, the lighting unit comprises a headlight of a vehicle. Further light sources of a vehicle may be also possible. By using an already existing light source of a vehicle, in particular a headlight of the vehicle, the predetermined light pattern can be easily emitted without the need of a further means. Hence, the costs can be reduced and the system can be simplified.

According to a particular embodiment, the headlight of the lighting unit comprises a digital light processing (DLP) projector and/or a liquid crystal display (LCD) projector. By using such a DLP and/or LCD projector, a predetermined light pattern can be easily emitted and projected at a desired area. Even though these projectors are well-known in the field of home entertainment, these projectors are not used for lights of a vehicle, in particular for a headlight of a vehicle. For example, laser-based lights or so-called pixel-headlamps are possible, too.

According to a further embodiment, the lighting unit is configured to emit the predetermined light pattern for a predefined time period. By limiting the emitting of the light pattern to a predefined time period, the lighting unit may be used for a further function in the rest of the time.

According to a particular embodiment, the predefined time period is less or equal than 20 ms, particularly less or equal than 5 ms. In particular, the time for emitting the predetermined light pattern may be limited to a time period which is less than the time period in which a user may notice the emitted light pattern. By limiting the time period for emitting a light pattern to such a short time period, a user will not perceive the emitted light pattern. Hence, the perception of a driver is not influenced.

According to a further embodiment, the lighting unit is configured to emit the predetermined light pattern periodically. By periodically emitting the predetermined light pattern, the calibration and/or monitoring of the camera can be continuously performed. Hence, disturbances can be recognized and/or the calibration parameters for the camera can be regularly adapted.

According to a further embodiment, the determined camera calibration or monitoring parameter comprises a parameter specifying soiling in an optical system of the camera. In this way, a soiling of the optical system of the camera can be easily determined. Hence, a disturbance in the operation during image capturing can be determined and the optical system may be cleaned automatically or by a user if necessary.

According to a further embodiment, the processor is further configured to adapt a setting of the camera according to the determined camera calibration or monitoring parameter. By automatically adapting the setting of the camera, an improved adaption of the camera calibration can be achieved.

According to a further aspect, the present invention provides a vehicle comprising a camera and an image calibration and monitoring apparatus. In this way, the image capturing system of the vehicle can be improved.

According to a further embodiment, the image calibration and monitoring method further comprises a step of adapting a setting of the camera according to the determined camera calibration or monitoring parameter.

According to a further embodiment, the method comprises a step of detecting soiling of an optical system of the camera based on the determined camera calibration or monitoring parameter.

According to further embodiment, the step of obtaining image data is synchronized with the step of emitting a predetermined light pattern. In particular, image data are obtained at the same when a predetermined light pattern is emitted.

According to a further embodiment, the method comprises a step of identifying an object in the obtained image data. By identifying an object in the image data of an area which has been illuminated by the emitted light pattern, an enhanced three-dimensional detection of objects may be achieved.

According to a further aspect, the present invention provides a computer program product adapted to perform an image calibration and monitoring method.

Further advantages and embodiments of the present invention will be apparent from the following description in conjunction with the accompanying figures, wherein same reference numerals relate to same or similar elements.

### Brief description of the drawings

- Figure 1: illustrates a schematical block diagram of an image calibration and monitoring apparatus according to an embodiment of the present invention;
- Figure 2: illustrates a vehicle comprising an image calibration and monitoring apparatus according to a further embodiment; and
- Figure 3: illustrates a flowchart of an image calibration and monitoring method underlying a further embodiment of the present invention.

### Detailed description of the invention

The following detailed description is merely exemplary in nature, and is not intended to limit the invention for the application and use of the invention.

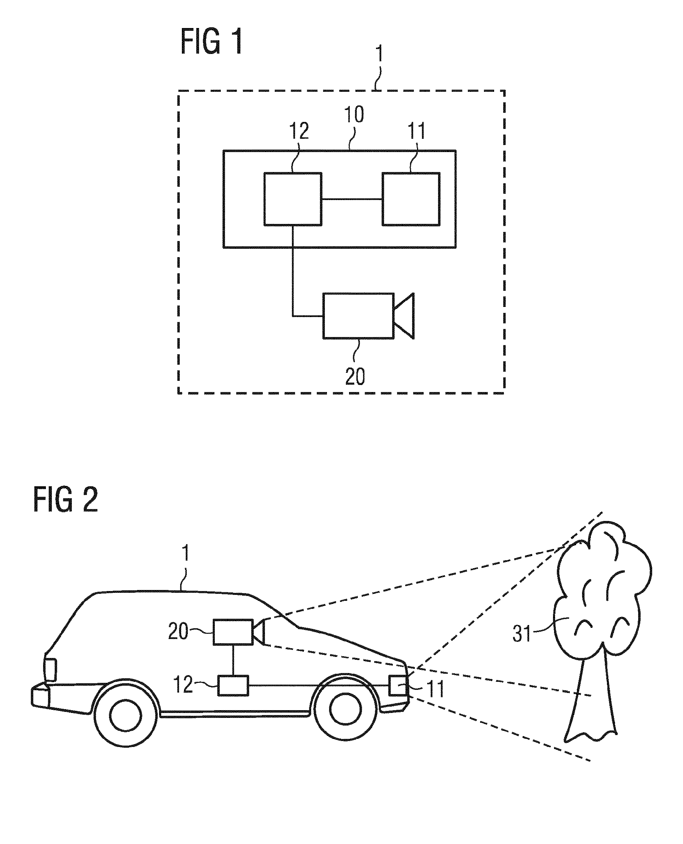

Figure 1 illustrates a schematical block diagram of an image calibration and monitoring apparatus according to an embodiment of the present invention. The image calibration and monitoring apparatus 10 comprises a lighting unit 11 and a processor 12. The lighting unit 11 may emit a predetermined light pattern. For instance, the predetermined light pattern may be a pattern comprising a plurality of parallel lines, for instance a plurality of horizontal or vertical lines. Alternatively, the predetermined light pattern may be a grid, for instance a grid comprising a plurality of parallel horizontal and vertical lines. The distance between the individual lines of the predetermined pattern may be the same for all lines or distances may vary according to a predefined rule. Further patterns, for example a plurality of circles or other geometrical elements may be possible, too. The emitted predetermined light pattern may be emitted by visible light. For instance, the light pattern may be emitted as white light or as a light in a particular colour, for instance blue, red and/or, green. Alternatively or in addition, it is also possible to emit the predetermined light pattern as invisible light, i.e. light having a wavelength which can not be recognized by a user. For instance, the lighting unit may emit infrared or ultraviolet light.

The emitted predetermined light pattern may be the same light pattern for each calibration and monitoring process. Alternatively, it is also possible to modify the predetermined light pattern which is emitted by the lighting unit 11. For instance, the light pattern may be shifted horizontally and/or vertically. Alternatively, the distance between lines of the predetermined pattern may be changed during the calibration and monitoring process. Further modifications of the predetermined light pattern, for instance changing the size of elements of the predetermined light pattern or other modifications are also possible. Additionally, it is also possible to change the colour of the light used for emitting the predetermined light pattern. For instance, the predetermined light pattern may be alternatively emitted with red, green and blue light. Further modifications are also possible.

In order to emit the predetermined light pattern, the lighting unit 11 may be a light source which already exists in the vehicle. For instance, the predetermined light pattern may be emitted by a headlight of a vehicle, or any other light source of the vehicle. In order to emit the predetermined light pattern, a mask may be placed in front of the light source. For instance, a mechanical drive may put such a mask in front of the light source during the calibration and monitoring process. After the calibration and monitoring process has been completed, the mask is removed. Alternatively, the predetermined light pattern may be generated by the light source itself. For instance, lighting unit 11 may be a digital light processing (DLP) projector. Such a DLP projector emits a desired image by means of plurality of micro-mirrors. According to another embodiment, a liquid crystal display (LCD) projector is used for generating the desired predetermined light pattern. Further methods for generating a predetermined light pattern are also possible. In particular, one or more light sources of a vehicle, such as headlights of the vehicle, may be adapted in order to emit light having a particular predetermined light pattern. For instance, pixel-headlights or laser-based headlights are possible, too.

In order to perform a calibration of a camera 20, for instance a camera 20 of a vehicle, the vehicle 1 with the camera 20 can be located in front of a special location. For instance, vehicle 1 with camera 20 may be located before a white wall. Alternatively, it may also possible to locate vehicle 1 with camera 20 in a particular environment, for instance at a parking area or a free area without any objects surrounding the vehicle 1. Further environments for performing a calibration and/or monitoring of camera 20 are possible, too. Alternatively, it is also possible to perform the calibration and/or monitoring process during normal operation, for instance, when the vehicle 1 is driving or the vehicle 1 is stopping (for example before a traffic light). Preferably, the calibration and/or monitoring of the camera 20 are performed in a dark environment. For example, the calibration and/or operation may be performed during night or inside a hall without external illumination.

When the calibration and/or monitoring of camera 10 is performed during normal operation of the vehicle 1, the predetermined light pattern may be emitted only for a short predefined time period. For example, the predetermined light pattern is emitted only for a few milliseconds. For instance, the predetermined light pattern is emitted only for 20 ms, 10 ms or less than 5 ms. In particular, the predetermined light pattern may be emitted for a time period being so short that a user does not perceive the emitted light pattern. In this way, the driver of the vehicle is not impaired during driving the vehicle.

In order to perform continuous monitoring of camera 20 and/or a continuous calibration of camera 20, the predetermined light pattern may be emitted periodically. For instance, a predetermined light pattern may be emitted every minute, every ten minutes or based on another predetermined time interval. In a particular embodiment, the emitted light pattern may be changed each time the light pattern is emitted during a periodical emitting of the predetermined light pattern.

The emitting of the predetermined light pattern by lighting unit 11 may be controlled by processor 12. In particular, processor 12 may specify the predetermined light pattern which has to be emitted by lighting unit 11. Additionally, the timing for emitting the predetermined light pattern may be also controlled by processor 12. Additionally, processor 12 may also control camera 20 in order to synchronize the emission of the predetermined light pattern and the image capturing process of camera 20. A subsequent determination of the camera calibration and monitoring parameter may be also performed by processor 12.

In order to perform a calibration and/or a monitoring of camera 20, camera 20 is synchronized with lighting unit 11. In other words, camera 20 captures an image at the same time when lighting unit 11 emits the predetermined light pattern. Since lighting unit 11 emits the predetermined light pattern completely or at least in part in the field of view of camera 20, camera 20 captures an image of the emitted predetermined light pattern and provides image data of the captured image. The image data of the image captured by camera 20 at the time when lighting unit 11 emits the light pattern are provided to processor 12. Processor 12 compares the image data provided by camera 20 with the data specifying the light pattern emitted by a lighting unit 11. Based on this comparison, processor 12 may determine a deviation between the emitted light pattern and the image data provided by camera 20. In order to calibrate the camera 20, processor 12 analyses this deviation between the captured image data and the specification of the emitted light pattern and determines one or more calibration parameters. This determination of calibration parameters based on the difference between the image data captured by camera 20 and the light pattern emitted by lighting unit 11 can be performed by any well-known algorithm. For instance, variations in the intensity of the capture image data may be analyzed in order to adapt the amplification of the individual pixels or pixel areas of camera 20. Alternatively, a deviation of a straight line of the emitted light pattern may be analyzed in order to identify a deformation of this line in the image captured by camera 20. Accordingly, one or more parameters for compensating such a deformation may be determined. Further parameters for calibrating camera 20 are also possible. The determined parameters for calibrating camera 20 are provided to camera 20 in order to adapt the setting of camera 20 accordingly. In this way, a real time calibration of camera 20 can be applied. In particular, it is possible to determine deviations which occur during driving the vehicle. Hence, the setting of the camera can be adapted in real time without the need of particular calibration environment. Processor 12 can also analyze the image data provided by camera 20 in order to analyze the optical system of camera 20. For instance, a sharp light pattern may be emitted by lighting unit 11. If the image data of the image captured by camera 12 is blurred, processor 12 may recognize that there is an error in the optical system of camera 20. For instance, a transparent cover or a lens of camera 12 may be soiled. For example, dust or soil may be located at the surface of a lens. In this case, processor 12 may output an alert or another signal in order to inform a user. Based on this indication, the user may manually or automatically initiate a cleaning of the optical system in order to remove the soil on the optical system of camera 20. Alternatively, it may also be determined that the optical system of camera 12 is defocused. In this case, the focus of the optical system may be manually or automatically corrected. Based on such a monitoring of the optical system of camera 20, the reliability of the obtained image data can be improved. If the monitoring of the camera comes to the conclusion that an error exists in the optical system of camera 20 (e.g. due to soiling of the optical system or a defocusing of the optical system) the image data may be no longer used in an advanced driver assistance system or another system of the vehicle considering the image data of camera 20.

Figure 2 shows a vehicle 1 comprising a camera 20 and an image calibration and monitoring apparatus according to a further embodiment of the present invention. Such a vehicle may be, for example an automobile such as a sedan, truck, van or a sports utility vehicle. However, other vehicles are possible, too. Further to the calibration and monitoring process of camera 20, the emitted light pattern may be also used for identifying an object 31 in the environment of vehicle 1. For instance, the predetermined light pattern may be emitted. If an object 31 exists in the environment of vehicle 1, the image of the emitted light pattern is altered. In this case, a location of the object 31 in the environment of vehicle 1 may be determined based on the modification of the emitted light pattern. In this way, a distance, size and/or shape of object 31 in the environment of vehicle 1 may be determined. In a particular embodiment, a three-dimensional modelling of object 31 in the environment of vehicle 1 may be generated based on the image data obtained when emitting of the predetermined light pattern. In a particular embodiment, the identified object 31 in the environment of vehicle 1 may be classified.

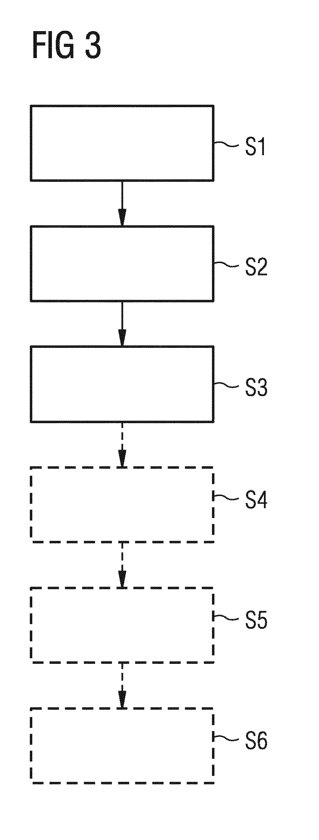

Figure 3 illustrates a flowchart for a method underlying a further embodiment of the image calibration and monitoring method for calibrating and monitoring an image of a camera 20 of a vehicle 1 according to a further embodiment of the present invention. In step S1, a predetermined light pattern is emitted. While emitting the predetermined light pattern, image data are obtained from the camera of the vehicle in step S2. The obtained image data are provided by camera 20 in response to the emitted predetermined light pattern. For this purpose, camera 10 for capturing an image is synchronized with a lighting unit 11 for emitting the predetermined light pattern. After the image data from camera 20 are obtained, at least one camera calibration or monitoring parameter is determined based on the obtained image data in step S3. In particular, the obtained image data are compared with data specifying the emitted light pattern. In order to emit the predetermined light pattern, processor 12 may control lighting unit 11. In particular, processor 12 may specify the predetermined light pattern which has to be emitted by lighting unit 11. Additionally, the timing for emitting the predetermined light pattern may be also controlled by processor 12. Additionally, processor 12 may also control camera 20 in order to synchronize the emission of the predetermined light pattern and the image capturing process of camera 20. A subsequent determination of the camera calibration and monitoring parameter may be also performed by processor 12.

After having determined the camera calibration or monitoring parameter, the setting of camera 20 may be adapted according to the determined camera calibration or monitoring parameter in step S4.

Alternatively or additionally, a soiling of the optical system of camera 20 may be detected based on the determined camera calibration or monitoring parameter in step S5.

Optionally, a further step S6 may identify an object in the obtained image data.

Summarizing, the present invention relates to an enhanced image calibration and monitoring apparatus and method for calibrating and monitoring an imaging of a camera of a vehicle. It is for this purpose, that a predetermined light pattern is emitted by a lighting unit, for instance a headlight of a vehicle. The headlight of the vehicle may be configured as a digital light processing projector or a liquid crystal display projector. The emitted light pattern is projected at least partly in the field of view of a camera. After capturing the emitted light pattern by this camera, the image data provided by the camera are analyzed in order to determine calibration or monitoring parameters of the camera.

In this way, an automated calibration and monitoring of an optical system may be obtained. By using the headlights of the vehicle for emitting the light pattern, no further light sources are required. Hence, the costs for such a calibration and monitoring can be reduced.

## Claims

1. An image calibration and monitoring apparatus (10) for calibrating and monitoring an imaging of a camera (20) of a vehicle (1), said apparatus (10) comprising:
a lighting unit (11) configured to emit a predetermined light pattern; and
a processor (12) configured to obtain image data from said camera (20) of the vehicle (1) in response to an emitted predetermined light pattern emitted by said lighting unit (11), and to determine a camera calibration or monitoring parameter based on said obtained image data.

2. The image calibration and monitoring apparatus (10) according to claim 1, wherein said light unit (11) comprises a headlight of the vehicle.

3. The image calibration and monitoring apparatus (10) according to claim 2, wherein said headlight comprises a digital light processing projector and/or a liquid crystal display projector.

4. The image calibration and monitoring apparatus (10) according to any of claims 1 to 3, wherein said lighting unit (11) is configured to emit said predetermined light pattern for a predefined time period.

5. The image calibration and monitoring apparatus (10) according to claim 4, wherein said predefined time period is less or equal than 20 milliseconds, particularly less or equal than 5 milliseconds.

6. The image calibration and monitoring apparatus (10) according to claim 1, wherein said lighting unit (11) is configured to emit said predetermined light pattern periodically.

7. The image calibration and monitoring apparatus (10) according to any of claims 1 to 6, wherein said determined camera calibration or monitoring parameter comprising a parameter specifying a soiling of an optical system of the camera (20).

8. The image calibration and monitoring apparatus (10) according to any of claims 1 to 7, wherein said processor (12) being further configured to adapt a setting of the camera (20) according to said determined camera calibration or monitoring parameter.

9. A vehicle (1) comprising a camera (20) and an image calibration and monitoring apparatus (10) according to any of claims 1 to 8.

10. An image calibration and monitoring method for calibrating and monitoring an imaging of a camera (20) of a vehicle (1), said method comprising the steps of:
emitting (S1) a predetermined light pattern;
obtaining (S2) image data from said camera (20) of the vehicle (5) in response to the emitted predetermined light pattern; and
determining (S3) camera calibration or monitoring parameter based on said obtained image data.

11. The method according to claim 10, further comprising a step (S4) of adapting a setting of the camera according to said determined camera calibration or monitoring parameter.

12. The method according to claim 10 or 11, further comprising a step of detecting (S5) a soiling of an optical system of the camera (20) based on the determined camera calibration or monitoring parameter.

13. The method according to any of claims 10 to 12, wherein said step (S1) of obtaining image data being synchronized with said step (S2) of emitting a predetermined light pattern.

14. The method according to any of claims 10 to 13, further comprising a step (S5) of identifying an object in said obtained image data.

15. A computer program product adapted to perform the method according to any of claims 10 to 14.
